# EUROPÄISCHE PATENTSCHRIFT

(11) **EP 3 422 123 B1**
(45) Veröffentlichungstag und Bekanntmachung des Hinweises auf die Patenterteilung: **23.09.2020**
(21) Anmeldenummer: 17178708.8
(22) Anmeldetag: 29.06.2017
(51) Int. Cl.: G05B 15/02

(54) **VERFAHREN UND ANORDNUNG ZUM RECHNERGESTÜTZTEN KONFIGURIEREN EINES TECHNISCHEN SYSTEMS**
METHOD AND ASSEMBLY FOR THE COMPUTER-ASSISTED CONFIGURING OF A TECHNICAL SYSTEM
PROCÉDÉ ET SYSTÈME DE CONFIGURATION ASSISTÉ PAR ORDINATEUR D'UN SYSTÈME TECHNIQUE

(43) Veröffentlichungstag der Anmeldung: 02.01.2019
(73) Patentinhaber: Siemens Aktiengesellschaft, 80333 München (DE)
(72) Erfinder: Buhl, Michael Bernhard, 85567 Grafing (DE); Ackermann, Simon, 80803 München (DE); Steinke, Florian, 81735 München (DE)

(56) Entgegenhaltungen:
- EP-A2- 3 002 649
- WO-A1-01/84468
- Marco Lindner ET AL: "Common Rank Approximation - A new method to speed up probabilistic calculations in distribution grid planning", , 1. Mai 2016 (2016-05-01), XP055291701, DOI: 10.1109/TDC.2016.7520057 Gefunden im Internet: URL:https://www.researchgate.net/profile/M arco_Lindner/publication/302913878_Common_ Rank_Approximation_-_A_new_method_to_speed _up_probabilistic_calculations_in_distribu tion_grid_planning/links/57333da708ae9f741 b260def.pdf?origin=publication_detail [gefunden am 2016-07-27]
- CHEN P ET AL: "Probabilistic load flow: A review", ELECTRIC UTILITY DEREGULATION AND RESTRUCTURING AND POWER TECHNOLOGIES, 2008. DRPT 2008. THIRD INTERNATIONAL CONFERENCE ON, IEEE, PISCATAWAY, NJ, USA, 6. April 2008 (2008-04-06), Seiten 1586-1591, XP031254106, ISBN: 978-7-900714-13-8

## Beschreibung

Für den Betrieb von technischen Systemen, zum Beispiel Stromnetzen, Windturbinen, Gasturbinen oder Fertigungsanlagen wird häufig gefordert, dass vorgegebene technische Parameter unter repräsentativen Betriebsbedingungen bestimmte Randbedingungen mit einer vorgegebenen Wahrscheinlichkeit erfüllen. In diesem Zusammenhang ist es für eine Konfiguration eines technischen Systems sehr nützlich, denjenigen Wert eines vorgegebenen Parameters zu ermitteln, der unter repräsentativen Betriebsbedingungen gerade mit einer vorgegebenen Wahrscheinlichkeit nicht überschritten wird. Dementsprechend kann beispielsweise für einen vorgegebenen Punkt in einem Stromnetz derjenige Spannungswert ermittelt werden, der unter repräsentativen Betriebsbedingungen mit einer Wahrscheinlichkeit von höchstens einem Prozent unterschritten wird. Ein solcher Spannungswert wird auch als 1%-Quantil bezeichnet. Das Stromnetz kann dann derart konfiguriert werden, dass der jeweils ermittelte Spannungswert bei repräsentativ variierenden Betriebsbedingungen den geforderten Randbedingungen mit der geforderten Wahrscheinlichkeit genügt.

Allgemein ist unter einem q-Quantil derjenige Parameterwert zu verstehen, bei dem ein Anteil von q der Parameterwerte unterhalb des q-Quantils und der Rest der Parameterwerte oberhalb des q-Quantils liegen. Der Anteilswert q eines q-Quantils wird häufig auch als Unterschreitungsanteil bezeichnet. Ein 50%-Quantil wird auch als Median bezeichnet.

Insofern die Betriebsbedingungen eines technischen Systems häufig erheblichen, insbesondere zufallsbedingten Schwankungen unterworfen sind, wie z.B. die Windverhältnisse bei einer Windturbine, werden die Betriebsbedingungen spezifizierende Betriebsparameter oft als Zufallsgrößen modelliert. Ein Quantil eines von statistisch verteilten Betriebsparametern abhängigen technischen Parameters kann dann anhand einer Monte-Carlo-Simulation ermittelt werden. Hierbei wird eine Vielzahl von Simulationen mit zufallsverteilten Betriebsparametern durchgeführt, wobei jeweils ein Schätzwert für den resultierenden technischen Parameter ermittelt wird. Aus der Vielzahl von resultierenden Schätzwerten kann dann das gesuchte Quantil des technischen Parameters ermittelt werden.

Eine genaue Monte-Carlo-Simulation erweist sich jedoch bei hinreichenden komplexen technischen Systemen aufgrund der Vielzahl der erforderlichen Simulationsdurchläufe häufig als sehr aufwendig oder kaum durchführbar. Andererseits ist eine weniger genaue Simulation mit einem vereinfachten Simulationsmodell für viele Anwendungen nicht genau genug.

Aus dem Dokument "Common Rank Approximation- A new method to speed up probabilistic calculations in distrbtion grid planning" von M. Lindner und R. Witzmann für die "Transmission and Distribution Conference and Exposition (T&D), 2016 IEEE/PES" ist bekannt, eine Vielzahl von Simulationen anhand eines vereinfachten Simulationsmodells durchzuführen und ein genaueres Simulationsmodell zur Verbesserung der Resultate zu verwenden. Durch dieses Verfahren kann ein erforderlicher Rechenaufwand zwar erheblich reduziert werden, doch liefert das Verfahren nur eine Approximation des gesuchten Quantils.

Es ist Aufgabe der vorliegenden Erfindung ein Verfahren, eine Anordnung, ein Computerprogrammprodukt sowie ein computerlesbares Speichermedium zum rechnergestützten Konfigurieren eines technischen Systems anzugeben, die eine genauere Konfiguration des technischen Systems erlauben.

Gelöst wird diese Aufgabe durch ein Verfahren mit den Merkmalen des Patentanspruchs 1, durch ein Verfahren mit den Merkmalen des Patentanspruchs 10, durch eine Anordnung mit den Merkmalen des Patentanspruchs 11, durch ein Computerprogrammprodukt mit den Merkmalen des Patentanspruchs 12 sowie ein computerlesbares Speichermedium mit den Merkmalen des Patentanspruchs 13.

Erfindungsgemäß wird zum rechnergestützten Konfigurieren eines technischen Systems ein eine Verfügbarkeit eines Bereitstellungsparameters des technischen Systems spezifizierender Anteilswert eingelesen. Der Bereitstellungsparameter kann hierbei insbesondere eine Eigenschaft eines bereitgestellten Versorgungsguts des technischen Systems angeben. Der Anteilswert kann insbesondere einen Unterschreitungsanteil eines zu ermittelnden Quantils des Bereitstellungsparameters spezifizieren. Weiterhin wird eine Vielzahl von Wertvarianten eines Betriebsparameters des technischen Systems generiert. Für eine jeweilige Wertvariante wird durch einen ersten Simulator des technischen Systems ein jeweiliger erster Schätzwert für den Bereitstellungsparameter ermittelt und der jeweiligen Wertvariante zugeordnet. Weiterhin werden die Wertvarianten zumindest teilweise nach den jeweils zugeordneten ersten Schätzwerten sortiert, und es wird ein dem Anteilswert entsprechendes Quantil der sortierten Wertvarianten ermittelt. Darüber hinaus werden mehrere hinsichtlich der Sortierung in einer Umgebung des Quantils befindliche Wertvarianten selektiert. Für eine jeweilige selektierte Wertvariante wird durch einen zweiten Simulator des technischen Systems ein jeweiliger zweiter Schätzwert für den Bereitstellungsparameter ermittelt. Alternativ oder zusätzlich wird für eine jeweilige selektierte Wertvariante ein jeweiliger Messwert für den Bereitstellungsparameter ermittelt. Erfindungsgemäß wird durch Ausgleichung von Schwankungen der zweiten Schätzwerte bzw. der Messwerte ein dritter Schätzwert für den Bereitstellungsparameter ermittelt und als Konfigurationsparameter zum Konfigurieren des technischen Systems ausgegeben.

Zur Durchführung des erfindungsgemäßen Verfahrens sind eine Anordnung zum rechnergestützten Konfigurieren des technischen Systems, ein Computerprogrammprodukt sowie ein computerlesbares Speichermedium vorgesehen.

Das erfindungsgemäße Verfahren und die erfindungsgemäße Anordnung können beispielsweise mit Hilfe von einem oder mehreren Prozessoren, anwendungsspezifischen integrierten Schaltungen (ASIC), digitalen Signalprozessoren (DSP) und/oder sogenannten "Field Programmable Gate Arrays" (FPGA) ausgeführt bzw. implementiert werden.

Ein Vorteil der Erfindung ist darin zu sehen, dass mit dem dritten Schätzwert ein verhältnismäßig genauer Wert für das q-Quantil des Bereitstellungsparameters mit verhältnismäßig geringem Rechenaufwand ermittelt werden kann. Somit kann das technische System mittels des dritten Schätzwerts genauer konfiguriert und an vorgegebene Verfügbarkeitsanforderungen angepasst werden.

Die Erfindung kann insbesondere zum Einrichten, Einstellen, Planen, Designen, Auslegen, Konstruieren und/oder Inbetriebnehmen von technischen Systemen oder deren Komponenten verwendet werden.

Vorteilhafte Ausführungsformen und Weiterbildungen der Erfindung sind in den abhängigen Ansprüchen angegeben.

Nach einer vorteilhaften Ausführungsform der Erfindung kann als technisches System ein Versorgungsnetz mit mehreren Netzknoten konfiguriert werden. Dabei kann der Betriebsparameter eine Einspeisung, eine Entnahme oder einen Bedarf eines Versorgungsguts an einem Netzknoten angeben, und der Bereitstellungsparameter eine Eigenschaft oder Güte des an einem Netzknoten oder an einer Knotenverbindung bereitgestellten Versorgungsguts. Als Versorgungsgut kann insbesondere Energie, Gas, Wasser oder Fernwärme bereitgestellt werden. Das Versorgungsnetz kann dann entsprechend ein Energienetz, Gasverteilungsnetz, Wasserverteilungsnetz oder Fernwärmenetz mit Stromleitungen, Gasleitungen, Wasserleitungen bzw. Fernwärmeleitungen als Knotenverbindungen sein. Durch den Bereitstellungsparameter kann eine Spannung, ein Druck, ein Füllstand, eine Temperatur oder eine andere Größe, die angibt, wie gut ein Bedarf erfüllt wird, spezifiziert werden.

Insbesondere kann als Versorgungsnetz ein Stromnetz konfiguriert werden. Dabei kann der Betriebsparameter eine Einspeiseleistung oder Entnahmeleistung an einem Netzknoten und der Bereitstellungsparameter eine Spannung, eine Wirkleistung, eine Blindleistung, eine Scheinleistung oder einen Strom an einem Netzknoten oder an einer Knotenverbindung angeben.

Vorzugsweise kann der erste Simulator die ersten Schätzwerte anhand eines gegenüber einem Simulationsmodell des zweiten Simulators vereinfachten Simulationsmodells ermitteln. Aufgrund dieser Vereinfachung kann das Simulationsmodell des ersten Simulators in der Regel mit erheblich geringeren Rechenressourcen ausgewertet werden, als das Simulationsmodell des zweiten Simulators. Auf diese Weise kann die Berechnung der ersten Schätzwerte für die Vielzahl von Wertvarianten in der Regel wesentlich verkürzt werden. Die zweiten Schätzwerte können anhand des aufwendiger auszuwertenden Simulationsmodells des zweiten Simulators in der Regel genauer als durch den ersten Simulator berechnet werden. Insofern die Berechnung der zweiten Schätzwerte aber auf die selektierten Wertvarianten beschränkt werden kann, bleibt ein hierfür erforderlicher Rechenaufwand in der Regel akzeptabel. Auf diese Weise lässt sich eine verhältnismäßig hohe Genauigkeit mit einem verhältnismäßig geringen Rechenaufwand verbinden.

Vorteilhafterweise kann als vereinfachtes Simulationsmodell ein linearisiertes Simulationsmodell verwendet werden. Insbesondere kann das vereinfachte Simulationsmodell durch Linearisierung eines nichtlinearen Simulationsmodells des zweiten Simulators abgeleitet werden. Derartige linearisierte Simulationsmodelle lassen sich in der Regel besonders effizient, schnell und stabil auswerten. Hierfür steht eine Vielzahl von Standardprogrammen zur Verfügung.

Nach einer vorteilhaften Ausführungsform der Erfindung können die Wertvarianten gemäß einer vorgegebenen Häufigkeitsverteilung und/oder gemäß einer vorgegebenen Randbedingung generiert werden. Vorzugsweise kann die Häufigkeitsverteilung eine unter typischen Betriebsbedingungen des technischen Systems zu erwartende statistische Verteilung der Werte der Betriebsparameter angeben. Auf diese Weise können durch die Simulationen realistische und/oder repräsentative Betriebsbedingungen nachgebildet werden.

Nach einer vorteilhaften Weiterbildung der Erfindung kann eine Schwankungsbreite der zweiten Schätzwerte ermittelt werden. Anhand der Schwankungsbreite kann dann ein Maß für eine Genauigkeit des dritten Schätzwerts abgeleitet und zum Konfigurieren des technischen Systems ausgegeben werden. Als Schwankungsbreite kann z.B. eine statistische Varianz, Streuung oder Standardabweichung der zweiten Schätzwerte ermittelt werden. Auf diese Weise kann ohne wesentlichen Zusatzaufwand die Genauigkeit des dritten Schätzwerts als des dem Anteilswert entsprechenden Quantils des Bereitstellungsparameters abgeschätzt werden.

Gemäß einer vorteilhaften Ausführungsform der Erfindung kann die Ausgleichung der Schwankungen anhand einer Ausgleichskurve für die zweiten Schätzwerte erfolgen. Insbesondere kann dabei der dritte Schätzwert durch Auswertung der Ausgleichskurve am Quantil der sortierten Wertvarianten ermittelt werden. Als Ausgleichskurve kann z.B. eine Gerade oder eine Parabel verwendet werden, deren Kurvenparameter mit geringem Aufwand mittels Standardverfahren ermittelt werden können.

Ein Ausführungsbeispiel der Erfindung wird nachfolgend anhand der Zeichnung näher erläutert. Dabei zeigen jeweils in schematischer Darstellung:
- Figur 1: ein Stromnetz mit mehreren Netzknoten,
- Figur 2: eine erfindungsgemäße Konfigurationseinrichtung zum Konfigurieren des Stromnetzes und
- Figur 3: ein Diagramm zur Veranschaulichung einer Genauigkeit des erfindungsgemäßen Verfahrens

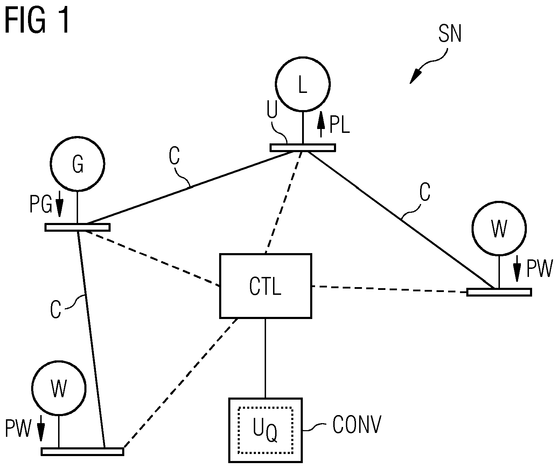

Figur 1 zeigt ein Stromnetz SN als zu konfigurierendes technisches System in schematischer Darstellung. Ein solches Stromnetz kann eine Vielzahl von Netzkomponenten, wie zum Beispiel Stromgeneratoren, konventionelle oder erneuerbare Energiequellen, Kraftwerke, Photovoltaikanlagen, Windkraftanlagen, Verbraucherlasten und Stromleitungen umfassen.

Im vorliegenden Ausführungsbeispiel weist das Stromnetz SN als Netzknoten ein konventionelles Kraftwerk G sowie Windkraftwerke W auf, die jeweils als Einspeisepunkt fungieren. Als weiteren Netzknoten umfasst das Stromnetz SN eine Verbraucherlast L als Entnahmepunkt. Die Netzknoten G, W und L sind durch Knotenverbindungen C, hier insbesondere Stromleitungen verbunden. Zum Steuern des Stromnetzes SN ist eine Steuereinrichtung CTL vorgesehen, zum Beispiel ein sogenanntes CPS (Control and Protection System). Die Steuereinrichtung CTL ist - wie in Figur 1 durch strichlierte Linien angedeutet - mit den Netzknoten G, W und L gekoppelt.

Anstelle des Stromnetzes SN können auch andere Versorgungsnetze für Versorgungsgüter wie Gas, Wasser oder Fernwärme vorgesehen sein. Auch hierbei sind Netzknoten, insbesondere Einspeise- und Entnahmepunkte durch Knotenverbindungen, insbesondere Verbindungs- oder Transportleitungen verbunden.

Ein komplexes technisches System wie das Stromnetz SN wird durch eine Vielzahl von Betriebsparametern charakterisiert. Im Allgemeinen können als Betriebsparameter insbesondere physikalische, regelungstechnische, wirkungstechnische und/oder bauartbedingte Betriebsgrößen, Eigenschaften, Leistungsdaten, Wirkungsdaten, Zustandsdaten, Systemdaten, Vorgabewerte, Steuerdaten, Sensordaten, Messwerte, Umgebungsdaten, Überwachungsdaten, Prognosedaten, Analysedaten und/oder andere im Betrieb des technischen Systems anfallende und/oder einen Betriebszustand des technischen Systems beschreibende Daten erfasst werden.

In Figur 1 sind als physikalische Betriebsparameter beispielhaft Leistungsflüsse PG, PW und PL an den Netzknoten G, W bzw. L dargestellt. Dabei bezeichnen PG eine Einspeiseleistung des Kraftwerks G, PW Einspeiseleistungen der Windkraftwerke W und PL eine Entnahmeleistung am Verbrauchernetzknoten L. Die physikalischen Betriebsparameter PG, PW und PL werden vorzugsweise als Komponenten eines Vektors P = (PG, PW, PL) dargestellt.

Abhängig von den physikalischen Betriebsparametern P stellt das Stromnetzt SN am Verbrauchernetzknoten L die elektrische Leistung PL mit einer Spannung U bereit. Die Spannung U kann in diesem Zusammenhang als physikalischer Bereitstellungsparameter aufgefasst werden, der eine Qualität des bereitgestellten Versorgungsguts, hier der Entnahmeleistung PL angibt.

Die Spannung U, mit der die Leistung PL bereitgestellt wird, darf in der Regel nur mit einer sehr geringen Wahrscheinlichkeit außerhalb enger vorgegebener Grenzen liegen. Im Allgemeinen sind jedoch sowohl die Einspeiseleistungen PW der Windkraftwerke W sowie die Entnahmeleistung PL am Lastnetzknoten L teils erheblichen Schwankungen unterworfen. Trotz eines teilweisen Ausgleichs durch das konventionelle Kraftwerk G induzieren diese Schwankungen in der Regel auch gewisse Schwankungen der Spannung U.

Das Stromnetz SN ist nun mittels der Erfindung so zu konfigurieren, dass die Schwankungen der Spannung U möglichst im erlaubten Bereich bleiben. Zu diesem Zweck ist eine Konfigurationseinrichtung CONV vorgesehen zum rechnergeschützten Konfigurieren des Stromnetzes SN, insbesondere der Netzknoten G, W, L und/oder der Steuereinrichtung CTL. Die Konfigurationseinrichtung CONV ist mit dem Stromnetz SN, mit den Netzknoten G, W, L und/oder mit der Steuereinrichtung CTL gekoppelt. Die Konfigurationseinrichtung CONV kann als Teil des Stromnetzes SN oder ganz oder teilweise extern zum Stromnetz SN implementiert sein.

Durch die Konfigurationseinrichtung CONV soll das Stromnetz SN so konfiguriert werden, dass die Spannung U einen bestimmten Wert U_{Q} bei repräsentativ schwankenden Betriebsparametern P nur mit einer vorgegebenen, geringen Wahrscheinlichkeit von zum Beispiel 0,1% unterschreitet. Zu diesem Zweck wird durch die Konfigurationseinrichtung CONV für eine erste Konfiguration des Stromnetzes SN derjenige Spannungswert U_{Q} ermittelt, der gerade mit der Wahrscheinlichkeit von 0,1% unterschritten wird. Mit U_{Q} wird also das 0,1%-Quantil der Spannung U ermittelt. Falls der ermittelte Spannungswert U_{Q} den geforderten Randbedingungen nicht genügt, werden die erste Konfiguration so lange geändert und der dazugehörige Spannungswert U_{Q} neu ermittelt, bis die geforderten Randbedingungen erfüllt sind.

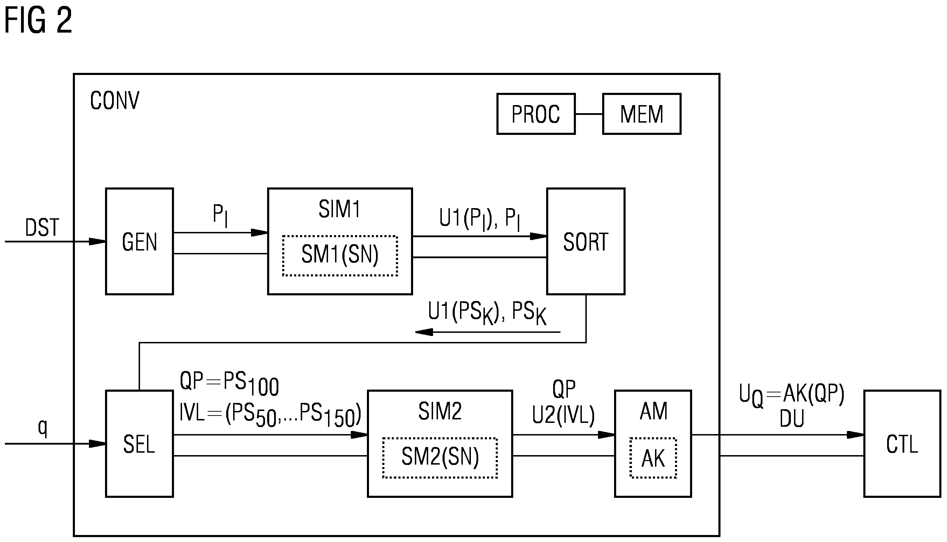

Figur 2 zeigt eine erfindungsgemäße Konfigurationseinrichtung CONV zum Konfigurieren des Stromnetzes SN in schematischer Darstellung. Die Konfigurationseinrichtung CONV umfasst einen oder mehrere Prozessoren PROC zum Ausführen aller Arbeitsschritte der Konfigurationseinrichtung CONV sowie einen oder mehrere Speicher MEM zum Speichern von durch die Konfigurationseinrichtung CONV zu verarbeitenden Daten. Die Konfigurationseinrichtung CONV ist an die Steuereinrichtung CTL des technischen Systems SN gekoppelt.

Wie oben bereits erwähnt, werden im vorliegenden Ausführungsbeispiel als physikalische Betriebsparameter des Stromnetzes SN die Einspeiseleistungen PG und PW sowie die Entnahmeleistung PL betrachtet und im Vektor P zusammengefasst. Aufgrund ihrer oft starken zufallsbedingten Schwankungen werden diese Betriebsparameter vorteilhafterweise als Zufallsgrößen betrachtet.

Als physikalischer Bereitstellungsparameter wird beispielhaft die Spannung U am Verbrauchernetzknoten L betrachtet. Alternativ oder zusätzlich können auch eine Wirkleistung, eine Blindleistung, eine Scheinleistung und/oder ein Strom an einem oder mehreren Netzknoten oder Knotenverbindungen als Bereitstellungsparameter des Stromnetzes SN betrachtet werden. Mehrere Bereitstellungsparameter werden dabei gegebenenfalls als Komponenten eines Vektors dargestellt. Der oder die Bereitstellungsparameter, hier U, hängen jeweils deterministisch über eine Netzdynamik des Stromnetzes SN von den Betriebsparametern P ab. Mithin induzieren die Schwankungen der Betriebsparameter P in der Regel entsprechende Schwankungen der Bereitstellungsparameter, hier U.

Durch die Konfigurationseinrichtung CONV werden eine statistische Häufigkeitsverteilung DST der als Zufallsgrößen betrachteten Betriebsparameter P sowie ein Anteilswert q eingelesen. Der Anteilswert q spezifiziert hierbei eine Verfügbarkeit des Bereitstellungsparameters U, insofern der Anteilswert q denjenigen Anteil von Werten des Bereitstellungsparameters U vorgibt bzw. begrenzt, der unterhalb des zu ermittelnden q-Quantils liegt.

Im vorliegenden Ausführungsbeispiel wird ein Anteilswert von q = 0,1% eingelesen, infolgedessen das 0,1%-Quantil U_{Q} der Spannung U ermittelt wird. Der Anteilswert q wird zu einem Selektionsmodul SEL der Konfigurationseinrichtung CONV übermittelt.

Die Häufigkeitsverteilung DST soll eine zu erwartende statistische Verteilung der Werte der Betriebsparameter P realistisch und repräsentativ angeben. Die Häufigkeitsverteilung DST kann empirisch im technischen System SN gemessen oder anderweitig ermittelt werden. Vorzugsweise können mit der Häufigkeitsverteilung DST auch eine oder mehrere Randbedingungen eingelesen werden, die von den Betriebsparametern P zu erfüllen sind.

Die Häufigkeitsverteilung DST wird gegebenenfalls zusammen mit den Randbedingungen zu einem Variantengenerator GEN der Konfigurationseinrichtung CONV übermittelt. Der Variantengenerator GEN dient zum zufallsbasierten Generieren einer Vielzahl von möglichen Wertvarianten P_{I} der Betriebsparameter P. Die Wertvarianten P_{I} werden dabei abhängig von der eingelesenen Häufigkeitsverteilung DST und gegebenenfalls abhängig von den eingelesenen Randbedingungen derart generiert, dass sie selbst die Häufigkeitsverteilung DST aufweisen und gegebenenfalls den eingelesenen Randbedingungen genügen. Zur Generierung derartiger Wertvarianten ist eine Vielzahl von effizienten Standardverfahren im Kontext sogenannter Monte-Carlo-Simulationen verfügbar.

Die generierten Wertvarianten P_{I} werden durch den Index I indiziert. Im vorliegenden Ausführungsbeispiel wird eine Anzahl von 100000 Wertvarianten P_{I} generiert, d.h. I=1,...,100000. Die Wertvarianten P_{I} werden vorzugsweise durch ein Array von Betriebsparametern beziehungsweise Betriebsparameter-Vektoren implementiert, das durch den Index I indiziert wird.

Bei einer Anzahl von 100000 Wertvarianten P_{I} ist das zu ermittelnde 0,1%-Quantil U_{Q} derjenige Spannungswert, bei dem 100 der durch die Betriebsparametervarianten P_{I} induzierten Spannungen U(P_{I}) darunter und der Rest darüber liegen. Die Wertvarianten P_{I} werden vom Variantengenerator GEN zu einem an diesen gekoppelten ersten Simulator SIM1 der Konfigurationseinrichtung CONV übermittelt.

Neben dem ersten Simulator SIM1 verfügt die Konfigurationseinrichtung CONV über einen zweiten Simulator SIM2. Die Simulatoren SIM1 und SIM2 simulieren jeweils für verschiedene Wertvarianten P_{I} jeweils ein dadurch induziertes Verhalten des technischen Systems SN. Im Rahmen der Simulationen ermittelt der erste Simulator SIM1 für eine jeweilige Wertvariante P_{I} insbesondere einen jeweiligen ersten Schätzwert U1(P_{I}) für den durch die jeweilige Wertvariante P_{I} induzierten Bereitstellungsparameter U. Entsprechend ermittelt der zweite Simulator SIM2 für ausgewählte Wertvarianten P_{I} jeweils einen zweiten Schätzwert U2(P_{I}) für den durch die betreffende Wertvariante P_{I} induzierten Bereitstellungsparameter U.

Der erste Simulator SIM1 verfügt über ein erstes Simulationsmodell SM1 des technischen Systems SN und der zweite Simulator SIM2 über ein zweites Simulationsmodell SM2 des technischen Systems SN. Die Simulationen des ersten Simulators SIM1 und des zweiten Simulators SIM2 werden jeweils anhand des ersten Simulationsmodells SM1 bzw. des zweiten Simulationsmodells SIM2 ausgeführt.

Das zweite Simulationsmodell SM2 ist vorzugsweise ein detailliertes, im Allgemeinen nichtlineares Simulationsmodell des technischen Systems SN. Im vorliegenden Ausführungsbeispiel ist das zweite Simulationsmodell SM2 ein nichtlineares Lastflussmodell des Stromnetzes SN, das auf einem System von nichtlinearen Lastflussgleichungen des Stromnetzes SN basiert. Eine auf einem solchen nichtlinearen Simulationsmodell basierende Simulation erfordert in der Regel einen verhältnismäßig hohen Rechenaufwand. Im vorliegenden Fall wäre eine individuelle Simulation anhand des zweiten Simulators SIM2 für alle 100000 Wertvarianten P_{I} hinsichtlich des erforderlichen Rechenaufwandes bei vielen Anwendungen kaum akzeptabel.

Das erste Simulationsmodell SM1 des Stromnetzes SN ist ein gegenüber dem zweiten Simulationsmodell SM2 vereinfachtes oder reduziertes Simulationsmodell. Eine solche Vereinfachung oder Reduktion kann vorzugsweise durch eine Linearisierung der Lastflussgleichungen, auf denen das zweite Simulationsmodell SM2 basiert, erzielt werden. Eine Simulation anhand eines linearisierten Simulationsmodells, hier SM1, erfordert in der Regel erheblich weniger Rechenressourcen als eine Simulation anhand eines nichtlinearen Simulationsmodells, hier SM2. Insbesondere lassen sich anhand des ersten Simulationsmodells SM1 die ersten Schätzwerte U1(P_{I}) in der Regel für alle Wertvarianten P_{I}, das heißt hier für 100000 Wertvarianten, mit akzeptablem Aufwand ermitteln.

Das erste Simulationsmodell SM1 kann in vielen Fällen als Ersatzmodell für das zweite Simulationsmodell SM2 fungieren. Eine Simulation mittels des ersten Simulationsmodells SM1 ist allerdings im Allgemeinen weniger genau als eine Simulation mittels des zweiten Simulationsmodells SM2.

Eine Linearisierung der Lastflussgleichungen für das erste Simulationsmodell SM1 kann zum Beispiel dadurch erfolgen, dass höhere Terme einer Abweichung einer Netzspannung von einer Referenz-Netzspannung, Soll-Netzspannung oder einer anderen vorgegebenen Netzspannung vernachlässigt werden.

Beim Erstellen des ersten Simulationsmodells SM1 beziehungsweise beim Ableiten des ersten Simulationsmodells SM1 aus dem zweiten Simulationsmodell SM2 wird insbesondere angestrebt, dass sich beim Sortieren der anhand des zweiten Simulationsmodells SM2 ermittelten zweiten Schätzwerte U2 nach ihrer Größe idealerweise die gleiche Reihenfolge ergeben soll, wie beim Sortieren der anhand des ersten Simulationsmodells SM1 ermittelten Schätzwerte U1 nach deren Größe. Obwohl die vorstehende Sortierungsbedingung zwar in der Regel nicht exakt erfüllbar ist, zeigen die Sortierungen von U1 und U2 häufig zumindest eine gewisse tendenzielle Übereinstimmung. Es erweist sich, dass diese tendenzielle Übereinstimmung in vielen Fällen bereits ausreicht, um die Anzahl der erforderlichen detaillierten Simulationen durch den zweiten Simulator SIM2 erheblich zu verringern.

Wie oben bereits erwähnt, werden die ersten Schätzwerte U1(P_{I}) durch den ersten Simulator SIM1 anhand des ersten Simulationsmodells SM1 durch Simulation einer Dynamik des Stromnetzes SN ermittelt. Die ermittelten ersten Schätzwerte U1(P_{I}) werden dann zusammen mit den Wertvarianten P_{I} durch den ersten Simulator SIM1 zu einem mit diesem gekoppelten Sortiermodul SORT der Konfigurationseinrichtung CONV übermittelt.

Anhand der ersten Schätzwerte U1(P_{I}) sortiert das Sortiermodul SORT das Array der Wertvarianten P_{I} nach der Größe der ersten Schätzwerte U1(P_{I}). Durch diese Umsortierung des Arrays P_{I} ergibt sich ein Array von sortierten Wertvarianten PS_{K} mit einem Sortierungsindex K. Der Sortierungsindex K=1,...,100000 indiziert die nach den ersten Schätzwerten sortierten Wertvarianten PS_{K} derart, dass die entsprechend sortierten ersten Schätzwerte U1(PS_{K}) mit steigendem Sortierungsindex K monoton ansteigen.

Die sortierten ersten Schätzwerte U1(PS_{K}) werden zusammen mit den sortierten Wertvarianten PS_{K} vom Sortiermodul SORT zu einem an dieses gekoppelten Selektionsmodul SEL der Konfigurationseinrichtung CONV übermittelt. Das Selektionsmodul SEL dient zum Selektieren eines q-Quantils QP der sortierten Wertvarianten PS_{K} sowie zum Selektieren einer Umgebung IVL des q-Quantils QP. Der Anteilswert q, hier 0,1%, wird durch das Selektionsmodul SEL eingelesen.

Abhängig vom eingelesenen Anteilswert q wird das q-Quantil QP hinsichtlich der Sortierung der sortierten Wertvarianten PS_{K} ermittelt, d.h. derart, dass ein Anteil von q der Sortierungsindizes K unterhalb des Quantil-Index liegt, der Rest oberhalb. Bei 100000 sortierten Wertvarianten PS_{K} und einem Anteilswert von q=0,1% ist folglich QP=PS₁₀₀.

Die vorzugsweise symmetrische Umgebung IVL des Quantils QP wird ebenfalls hinsichtlich der Sortierung der sortierten Wertvarianten PS_{K} selektiert. Erfindungsgemäß wird aus den sortierten Wertvarianten PS_{K} eine Anzahl von Wertvarianten selektiert, die klein gegenüber der Anzahl aller Wertvarianten P_{I} ist. Im vorliegenden Ausführungsbeispiel wird eine Umgebung IVL mit 101 sortierten Wertvarianten PS_{K} selektiert, so dass IVL= (PS₅₀,..., PS₁₅₀) . Demgegenüber ist die Anzahl aller Wertvarianten um mehrere Größenordnungen größer.

Die Anzahl der selektierten Wertvarianten PS₅₀,...,PS₁₅₀ bestimmt die Anzahl der erforderlichen, aufwendigen Simulationen durch den zweiten Simulator SIM2. Auf diese Weise kann im vorliegenden Ausführungsbeispiel die Anzahl der aufwendigen Simulationen durch den zweiten Simulator SIM2 auf 1/1000 der Anzahl der Simulationen durch den vereinfachten, ersten Simulator SIM1 reduziert werden.

Das q-Quantil QP sowie dessen Umgebung IVL werden vom Selektionsmodul SEL zu dem an dieses gekoppelten zweiten Simulator SIM2 übermittelt. Der zweite Simulator SIM2 ermittelt für die selektierten Wertvarianten PS₅₀,...,PS₁₅₀ der Umgebung IVL jeweils zweite Schätzwerte U2 (PS_{K}) für K=50,...,150. Für Wertvarianten außerhalb der Umgebung IVL wird keine aufwendige Simulation durch den zweiten Simulator SIM2 durchgeführt.

Die zweiten Schätzwerte U2(PS_{K}) werden vorzugsweise als nach K bzw. U1(PS_{K}) sortiertes Array gespeichert. In Figur 2 werden die zweiten Schätzwerte (U2(PS₅₀),...,U2(PS₁₅₀)) als U2(IVL) bezeichnet.

Die nach dem Sortierungsindex K sortierten zweiten Schätzwerte U2(PS_{K}) können als Funktion von K erhebliche Schwankungen aufweisen, da sie gewissermaßen nach der Größe der ersten Schätzwerte U1(PS_{K}) sortiert sind, und die Sortierungen der ersten und der zweiten Schätzwerte - wie oben bereits erwähnt - in der Regel nicht exakt übereinstimmen.

Das q-Quantil QP sowie die zweiten Schätzwerte U2(IVL) werden vom zweiten Simulator SIM2 zu einem an diesen gekoppelten Ausgleichsmodul AM der Konfigurationseinrichtung CONV übermittelt. Das Ausgleichsmodul AM dient zur Ausgleichung von Schwankungen der nach den ersten Schätzwerten sortierten zweiten Schätzwerte U2(PS_{K}). Zu diesem Zweck können die zweiten Schätzwerte U2(PS_{K}) statistisch gemittelt werden. Alternativ oder zusätzlich kann ein Modell oder eine Modellkurve an einen Verlauf der zweiten Schätzwerte U2(PS_{K}) derart angepasst werden, dass eine Abweichung zwischen Modell beziehungsweise Modellkurve und den zweiten Schätzwerten U2(PS_{K}) möglichst gering ist. Für eine solche Anpassung, die häufig auch als Fitting oder Regression bezeichnet wird, stehen eine Vielzahl von Standardverfahren zur Verfügung.

Im vorliegenden Ausführungsbeispiel werden die Schwankungen der zweiten Schätzwerte U2(PS_{K}) durch eine Ausgleichskurve AK, zum Beispiel eine Ausgleichsparabel ausgeglichen. Die Kurvenparameter der Ausgleichskurve AK werden so bestimmt, dass Abweichungen zwischen der Ausgleichskurve AK und den zweiten Schätzwerten U2 (PS_{K}) für K=50,..., 150 minimal sind. Die Ausgleichskurve AK wird durch das Ausgleichsmodul AM am Quantil QP der selektierten Wertvarianten, das heißt bei K=100 ausgewertet. Als Resultat dieser Auswertung ergibt sich ein dritter Schätzwert U_{Q}=AK(PS₁₀₀). Der dritte Schätzwert U_{Q} ist damit ein Wert für das gesuchte q-Quantil des Bereitstellungsparameters U.

Es erweist sich, dass ein Großteil der Fehler, die durch das Nichterfüllen der oben erwähnten Sortierungsbedingung entstanden ist, durch die Ausgleichskurve AK kompensiert werden kann. Durch den erfindungsgemäßen Schwankungsausgleich lässt sich daher das q-Quantil U_{Q} in der Regel sehr genau ermitteln.

Weiterhin wird durch das Ausgleichsmodul AM eine Schwankungsbreite der zweiten Schätzwerte U2(IVL) bestimmt, zum Beispiel als mittlere Abweichung zwischen der Ausgleichskurve AK und der Kurve der zweiten Schätzwerte U2(IVL). Alternativ oder zusätzlich kann auch eine Varianz, Streuung oder Standardabweichung der zweiten Schätzwerte U2(IVL) als Schwankungsbreite bestimmt werden. Die Schwankungsbreite bildet ein Maß DU für eine Genauigkeit des dritten Schätzwertes U_{Q}, das ohne großen Zusatzaufwand im Rahmen des erfindungsgemäßen Verfahrens ermittelt werden kann.

Der dritte Schätzwert U_{Q} sowie das Genauigkeitsmaß DU werden als Konfigurationsparameter von der Konfigurationseinrichtung CONV an die Steuereinrichtung CTL zur Konfiguration des Stromnetzes SN übermittelt.

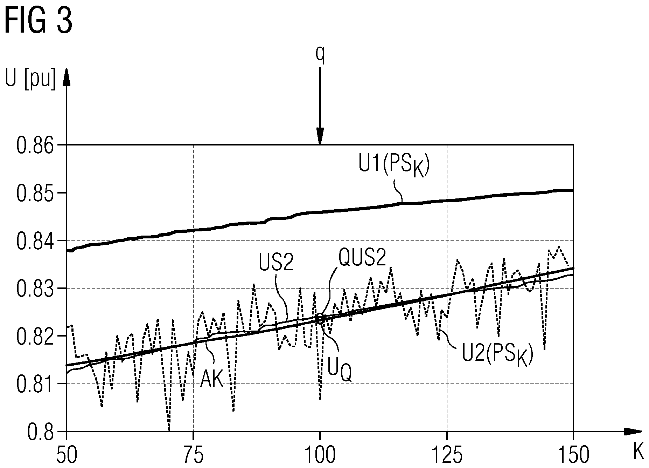

Figur 3 zeigt ein Diagramm zur Veranschaulichung einer Genauigkeit des erfindungsgemäßen Verfahrens. Im Diagramm ist ein Verlauf der vorstehend beschriebenen Größen, nämlich der sortierten ersten Schätzwerte U1(PS_{K}), der zweiten Schätzwerte U2(PS_{K}) sowie der Ausgleichskurve AK, jeweils als Funktion des Sortierungsindex K für K=50,...,150 dargestellt. Als Ausgleichskurve AK wurde eine Ausgleichsparabel gewählt.

Auf der Abszisse des Diagramms ist der Sortierungsindex K aufgetragen und auf der Ordinate die Spannung U am Verbrauchernetzknoten L in einem sogenannten Per-Unit-System. Ein solches Per-Unit-System, abgekürzt "pu", gibt die Spannung U bezogen auf einen vorgegebenen Bezugswert an.

Da die sortierten Wertvarianten PS_{K} nach der Größe der ersten Schätzwerte U1 sortiert sind, ist U1(PS_{K}) als Funktion von K - wie in Figur 3 zu erkennen ist - monoton steigend. Dagegen weisen die zweiten Schätzwerte U2(PS_{K}) als Funktion von K - wie oben bereits erläutert - erhebliche Schwankungen auf. Darüber hinaus ist deutlich zu erkennen, dass die durch den genaueren zweiten Simulator SIM2 ermittelten, zweiten Schätzwerte U2(PS_{K}) ungeachtet ihrer Schwankungen systematisch von den durch den ersten Simulator SIM1 ermittelten, ersten Schätzwerten U1(PS_{K}) abweichen.

Die Schwankungen der zweiten Schätzwerte U2(PS_{K}) werden durch die Ausgleichsparabel AK weitgehend kompensiert. Durch Auswertung der Ausgleichsparabel AK am q-Quantil QP ergibt sich der dritte Schätzwert U_{Q}.

Zur Veranschaulichung der Genauigkeit des dritten Schätzwertes U_{Q} ist in Figur 3 zusätzlich noch ein Verlauf von durch den zweiten Simulator SIM2 ermittelten zweiten Schätzwerten US2 dargestellt. Die zweiten Schätzwerte US2 sind hierbei nach ihrer eigenen Größe sortiert dargestellt. Aufgrund der Sortierung der zweiten Schätzwerte US2 ergibt sich ein monotoner Verlauf.

Eine Auswertung des Verlaufs der zweiten Schätzwerte US2 am Anteilswert q resultiert in einem q-Quantil QUS2, hier einem 0,1%-Quantil, der zweiten Schätzwerte US2. Insofern die zweiten Schätzwerte US2 durch den genaueren zweiten Simulator SIM2 ermittelt wurden, kann das q-Quantil QUS2 als verhältnismäßig genauer Referenzwert für das gesuchte q-Quantil der Spannung U aufgefasst werden.

Es sei darauf hingewiesen, dass die Darstellung der zweiten Schätzwerte US2 in Figur 3 nur zu Vergleichszwecken dient, insofern zu deren Ermittlung eine aufwendige Simulation durch den zweiten Simulator SIM2 für alle 100000 Wertvarianten durchzuführen ist, während gemäß der Erfindung die aufwendige Simulation auf den erheblich kleineren Bereich der Umgebung IVL beschränkt werden kann. Wie oben bereits erwähnt, kann im vorliegenden Ausführungsbeispiel die Anzahl der aufwendigen Simulationen durch den zweiten Simulator SIM2 auf 1/1000 der Anzahl der vereinfachten Simulationen durch den ersten Simulator SIM1 reduziert werden.

Es zeigt sich, dass der dritte Schätzwert U_{Q} nur eine sehr geringe Abweichung von dem durch genaue Simulation ermittelten q-Quantil QUS2 hat. U_{Q} ist somit ein sehr guter Schätzwert, der mit erheblich geringerem Aufwand ermittelt werden kann als das q-Quantil QUS2. Mittels der Erfindung kann also eine hohe Genauigkeit mit einem verhältnismäßig geringen Rechenaufwand erzielt werden. Darüber hinaus steht mit der Größe DU auch ein Maß für die Genauigkeit des ermittelten dritten Schätzwertes U_{Q} zur Verfügung und kann bei der Konfiguration des technischen Systems SN in vorteilhafter Weise berücksichtigt werden.

## Patentansprüche

1. Verfahren zum rechnergestützten Konfigurieren eines technischen Systems (SN), wobei
a) ein eine Verfügbarkeit eines Bereitstellungsparameters (U) des technischen Systems (SN) spezifizierender Anteilswert (q) eingelesen wird,
b) eine Vielzahl von Wertvarianten (P_{I}) eines Betriebsparameters (PG, PW, PL) des technischen Systems (SN) generiert werden,
c) für eine jeweilige Wertvariante (P_{I}) durch einen ersten Simulator (SIM1) des technischen Systems (SN) ein jeweiliger erster Schätzwert (U1) für den Bereitstellungsparameter (U) ermittelt und der jeweiligen Wertvariante (P_{I}) zugeordnet wird,
d) die Wertvarianten (P_{I}) zumindest teilweise nach den jeweils zugeordneten ersten Schätzwerten (U1) sortiert werden,
e) ein dem Anteilswert (q) entsprechendes Quantil (QP) der sortierten Wertvarianten (PS_{K}) ermittelt wird,
f) mehrere hinsichtlich der Sortierung in einer Umgebung (IVL) des Quantils (QP) befindliche Wertvarianten (PS₅₀, ..., PS₁₅₀) selektiert werden,
g) für eine jeweilige selektierte Wertvariante (PS₅₀, ... , PS₁₅₀) durch einen zweiten Simulator (SIM2) des technischen Systems (SN) ein jeweiliger zweiter Schätzwert (U2) für den Bereitstellungsparameter (U) ermittelt wird,
h) durch Ausgleichung von Schwankungen der zweiten Schätzwerte (U2) ein dritter Schätzwert (U_{Q}) für den Bereitstellungsparameter (U) ermittelt wird, und
i) der dritte Schätzwert (U_{Q}) als Konfigurationsparameter zum Konfigurieren des technischen Systems (SN) ausgegeben wird.

2. Verfahren nach Anspruch 1, **dadurch gekennzeichnet,**
**dass** als technisches System (SN) ein Versorgungsnetz mit mehreren Netzknoten konfiguriert wird,
**dass** der Betriebsparameter eine Einspeisung, eine Entnahme oder einen Bedarf eines Versorgungsguts an einem Netzknoten angibt und
**dass** der Bereitstellungsparameter eine Eigenschaft oder Güte des an einem Netzknoten oder an einer Knotenverbindung bereitgestellten Versorgungsguts angibt.

3. Verfahren nach Anspruch 2, **dadurch gekennzeichnet,**
**dass** als Versorgungsnetz ein Stromnetz (SN) konfiguriert wird,
**dass** der Betriebsparameter eine Einspeiseleistung (PG, PW) oder Entnahmeleistung (PL) an einem Netzknoten (G, W, L) angibt und
**dass** der Bereitstellungsparameter eine Spannung (U), eine Wirkleistung, eine Blindleistung, eine Scheinleistung oder einen Strom an einem Netzknoten (G, W, L) oder an einer Knotenverbindung (C) angibt.

4. Verfahren nach einem der vorhergehenden Ansprüche, **dadurch gekennzeichnet, dass**
der erste Simulator (SIM1) die ersten Schätzwerte (U1) anhand eines gegenüber einem Simulationsmodell (SM2) des zweiten Simulators (SIM2) vereinfachten Simulationsmodells (SM1) ermittelt.

5. Verfahren nach Anspruch 4, **dadurch gekennzeichnet, dass** als vereinfachtes Simulationsmodell (SM1) ein linearisiertes Simulationsmodell verwendet wird.

6. Verfahren nach einem der vorhergehenden Ansprüche, **dadurch gekennzeichnet, dass**
die Wertvarianten (P_{I}) gemäß einer vorgegebenen Häufigkeitsverteilung (DST) und/oder gemäß einer vorgegebenen Randbedingung generiert werden.

7. Verfahren nach einem der vorhergehenden Ansprüche, **dadurch gekennzeichnet,**
**dass** eine Schwankungsbreite der zweiten Schätzwerte (U2) ermittelt wird und
**dass** anhand der Schwankungsbreite ein Maß (DU) für eine Genauigkeit des dritten Schätzwerts (U_{Q}) abgeleitet und zum Konfigurieren des technischen Systems (SN) ausgegeben wird.

8. Verfahren nach einem der vorhergehenden Ansprüche, **dadurch gekennzeichnet,**
**dass** die Ausgleichung der Schwankungen anhand einer Ausgleichskurve (AK) für die zweiten Schätzwerte (U2) erfolgt.

9. Verfahren nach Anspruch 8, **dadurch gekennzeichnet,**
**dass** der dritte Schätzwert (U_{Q}) durch Auswertung der Ausgleichskurve (AK) am Quantil (QP) der sortierten Wertvarianten (PS_{K}) ermittelt wird.

10. Verfahren zum rechnergestützten Konfigurieren eines technischen Systems (SN), wobei
a) ein eine Verfügbarkeit eines Bereitstellungsparameters (U) des technischen Systems (SN) spezifizierender Anteilswert (q) eingelesen wird,
b) eine Vielzahl von Wertvarianten (P_{I}) eines Betriebsparameters (PG, PW, PL) des technischen Systems (SN) generiert werden,
c) für eine jeweilige Wertvariante (P_{I}) durch einen ersten Simulator (SIM1) des technischen Systems (SN) ein jeweiliger erster Schätzwert (U1) für den Bereitstellungsparameter (U) ermittelt und der jeweiligen Wertvariante (P_{I}) zugeordnet wird,
d) die Wertvarianten (P_{I}) zumindest teilweise nach den jeweils zugeordneten ersten Schätzwerten (U1) sortiert werden,
e) ein dem Anteilswert (q) entsprechendes Quantil (QP) der sortierten Wertvarianten (PS_{K}) ermittelt wird,
f) mehrere hinsichtlich der Sortierung in einer Umgebung (IVL) des Quantils (QP) befindliche Wertvarianten (PS₅₀, ..., PS₁₅₀) selektiert werden,
g) für eine jeweilige selektierte Wertvariante (PS₅₀,...,PS₁₅₀) ein jeweiliger Messwert für den Bereitstellungsparameter (U) des technischen Systems (SN) ermittelt wird,
h) durch Ausgleichung von Schwankungen der Messwerte ein dritter Schätzwert (U_{Q}) für den Bereitstellungsparameter (U) ermittelt wird, und
i) der dritte Schätzwert (U_{Q}) als Konfigurationsparameter zum Konfigurieren des technischen Systems (SN) ausgegeben wird.

11. Anordnung zum rechnergestützten Konfigurieren eines technischen Systems, eingerichtet zum Ausführen eines Verfahrens nach einem der vorhergehenden Ansprüche.

12. Computerprogrammprodukt eingerichtet zum Ausführen eines Verfahrens nach einem der Ansprüche 1 bis 10.

13. Computerlesbares Speichermedium mit einem Computerprogrammprodukt nach Anspruch 12.

## Claims

1. Method for the computer-aided configuration of a technical system (SN), wherein
a) a proportion value (q) specifying an availability of a provision parameter (U) of the technical system (SN) is read in,
b) a multiplicity of value variants (P_{I}) of an operating parameter (PG, PW, PL) of the technical system (SN) are generated,
c) a respective first estimate (U1) for the provision parameter (U) is determined for a respective value variant (P_{I}) by a first simulator (SIM1) of the technical system (SN) and is assigned to the respective value variant (P_{I}),
d) at least some of the value variants (P_{I}) are sorted according to the respectively assigned first estimates (U1),
e) a quantile (QP) for the sorted value variants (PS_{K}) that corresponds to the proportion value (q) is determined,
f) multiple value variants (PS₅₀,...,PS₁₅₀) that are in a vicinity (IVL) of the quantile (QP) in respect of the sorting are selected,
g) a respective second estimate (U2) for the provision parameter (U) is determined for a respective selected value variant (PS₅₀,...,PS₁₅₀) by a second simulator (SIM2) of the technical system (SN),
h) a third estimate (U_{Q}) for the provision parameter (U) is determined by equalizing variations in the second estimates (U2), and
i) the third estimate (U_{Q}) is output as a configuration parameter for configuring the technical system (SN).

2. Method according to Claim 1, **characterized**
**in that** the technical system (SN) configured is a supply network having multiple network nodes,
**in that** the operating parameter specifies a feed of, an extraction of or a need for a supply item at a network node, and
**in that** the provision parameter specifies a property or quality level of the supply item provided at a network node or at a node connection.

3. Method according to Claim 2, **characterized**
**in that** the supply network configured is a power grid (SN),
**in that** the operating parameter specifies a feed power (PG, PW) or extraction power (PL) at a network node (G, W, L), and in that the provision parameter specifies a voltage (U), a real power, a reactive power, an apparent power or a current at a network node (G, W, L) or at a node connection (C).

4. Method according to one of the preceding claims, **characterized in that**
the first simulator (SIM1) determines the first estimates (U1) on the basis of a simulation model (SM1) that is simplified in comparison with a simulation model (SM2) of the second simulator (SIM2).

5. Method according to Claim 4, **characterized in that**
the simplified simulation model (SM1) used is a linearized simulation model.

6. Method according to one of the preceding claims, **characterized in that**
the value variants (P_{I}) are generated in accordance with a prescribed frequency distribution (DST) and/or in accordance with a prescribed constraint.

7. Method according to one of the preceding claims, **characterized**
**in that** a variability of the second estimates (U2) is determined and
**in that** the variability is taken as a basis for deriving a measure (DU) of an accuracy of the third estimate (U_{Q}) and outputting it for configuring the technical system (SN).

8. Method according to one of the preceding claims, **characterized**
**in that** the variations are equalized on the basis of an equalization curve (AK) for the second estimates (U2).

9. Method according to Claim 8, **characterized**
**in that** the third estimate (U_{Q}) is determined by evaluating the equalization curve (AK) using the quantile (QP) of the sorted value variants (PS_{K}).

10. Method for the computer-aided configuration of a technical system (SN), wherein
a) a proportion value (q) specifying an availability of a provision parameter (U) of the technical system (SN) is read in,
b) a multiplicity of value variants (P_{I}) of an operating parameter (PG, PW, PL) of the technical system (SN) are generated,
c) a respective first estimate (U1) for the provision parameter (U) is determined for a respective value variant (P_{I}) by a first simulator (SIM1) of the technical system (SN) and is assigned to the respective value variant (P_{I}),
d) at least some of the value variants (P_{I}) are sorted according to the respectively assigned first estimates (U1),
e) a quantile (QP) for the sorted value variants (PS_{K}) that corresponds to the proportion value (q) is determined,
f) multiple value variants (PS₅₀,...,PS₁₅₀) that are in a vicinity (IVL) of the quantile (QP) in respect of the sorting are selected,
g) a respective measured value for the provision parameter (U) of the technical system (SN) is determined for a respective selected value variant (PS₅₀,...,PS₁₅₀),
h) a third estimate (U_{Q}) for the provision parameter (U) is determined by equalizing variations in the measured values, and
i) the third estimate (U_{Q}) is output as a configuration parameter for configuring the technical system (SN).

11. Arrangement for the computer-aided configuration of a technical system, designed to carry out a method according to one of the preceding claims.

12. Computer program product designed to carry out a method according to one of Claims 1 to 10.

13. Computer-readable storage medium having a computer program product according to Claim 12.

## Revendications

1. Procédé destiné à la configuration assistée par ordinateur d'un système technique (SN), dans lequel
a) une valeur unitaire (q) qui spécifie une disponibilité d'un paramètre de mise à disposition (U) du système technique (SN) est lue,
b) une pluralité de variantes de valeur (P_{I}) d'un paramètre opérationnel (PG, PW, PL) du système technique (SN) sont générées,
c) une première valeur estimative respective (U1) est déterminée pour le paramètre de mise à disposition (U) pour une variante de valeur respective (P_{I}) et est associée à la variante de valeur respective (P_{I}) par le biais d'un premier simulateur (SIM1) du système technique (SN),
d) les variantes de valeur (P_{I}) sont triées au moins partiellement selon les premières valeurs estimatives (U1) respectivement associées,
e) un quantile (QP) des variantes de valeur triées (PS_{K}) correspondant à la valeur unitaire (q) est déterminé,
f) de multiples variantes de valeur (PS₅₀, ..., PS₁₅₀) qui se trouvent dans un environnement proche (IVL) du quantile (QP) en ce qui concerne le tri sont sélectionnées,
g) une deuxième valeur estimative respective (U2) pour le paramètre de mise à disposition (U) est déterminée pour une variante de valeur sélectionnée respective (PS₅₀, ..., PS₁₅₀) par le biais d'un second simulateur (SIM2) du système technique (SN),
h) une troisième valeur estimative (U_{Q}) est déterminée pour le paramètre de mise à disposition (U) par le biais d'une compensation de fluctuations des deuxièmes valeurs estimatives (U2), et
i) la troisième valeur estimative (U_{Q}) est communiquée en tant que paramètre de configuration destiné à la configuration du système technique (SN).

2. Procédé selon la revendication 1, **caractérisé en ce que**, en tant que système technique (SN) un réseau d'approvisionnement comportant de multiples nœuds de réseau est configuré, **en ce que** le paramètre opérationnel indique une alimentation, une extraction ou un besoin de bien d'approvisionnement au niveau d'un nœud de réseau et **en ce que** le paramètre de mise à disposition indique une propriété ou une qualité du bien d'approvisionnement mis à disposition au niveau d'un nœud de réseau ou d'une connexion de nœuds.

3. Procédé selon la revendication 2, **caractérisé en ce que**, en tant que réseau d'approvisionnement, un réseau électrique (SN) est configuré, **en ce que** le paramètre opérationnel indique une puissance d'alimentation (PG, PW) ou une puissance d'extraction (PL) au niveau d'un nœud de réseau (G, W, L) et **en ce que** le paramètre de mise à disposition indique une tension (U), une puissance active, une puissance réactive, une puissance apparente ou un courant au niveau d'un nœud de réseau (G, W, L) ou d'une connexion de nœuds (C).

4. Procédé selon l'une des revendications précédentes, **caractérisé en ce que** le premier simulateur (SIM1) détermine les premières valeurs estimatives (U1) à l'aide d'un modèle de simulation (SM1) simplifié par rapport à un modèle de simulation (SM2) du second simulateur (SIM2) .

5. Procédé selon la revendication 4, **caractérisé en ce qu'**un modèle de simulation linéarisé est utilisé en tant que modèle de simulation simplifié (SM1).

6. Procédé selon l'une des revendications précédentes, **caractérisé en ce que** les variantes de valeur (P_{I}) sont générées selon une répartition de périodicité prédéfinie (DST) et/ou selon une condition limite prédéfinie.

7. Procédé selon l'une des revendications précédentes, **caractérisé en ce qu'**une marge de fluctuation des deuxièmes valeurs estimatives (U2) est déterminée et **en ce que**, à l'aide de la marge de fluctuation, une mesure (DU) est dérivée pour une exactitude de la troisième valeur estimative (U_{Q}) et est communiquée pour la configuration du système technique (SN).

8. Procédé selon l'une des revendications précédentes, **caractérisé en ce que** la compensation des fluctuations se produit à l'aide d'une courbe de compensation (AK) pour les deuxièmes valeurs estimatives (U2).

9. Procédé selon la revendication 8, **caractérisé en ce que** la troisième valeur estimative (U_{Q}) est déterminée par le biais d'une évaluation de la courbe de compensation (AK) au niveau du quantile (QP) des variantes de valeur triées (PS_{K}) .

10. Procédé destiné à la configuration assistée par ordinateur d'un système technique (SN), dans lequel
a) une valeur unitaire (q) qui spécifie une disponibilité d'un paramètre de mise à disposition (U) du système technique (SN) est lue,
b) une pluralité de variantes de valeur (P_{I}) d'un paramètre opérationnel (PG, PW, PL) du système technique (SN) sont générées,
c) une première valeur estimative respective (U1) est déterminée pour le paramètre de mise à disposition (U) pour une variante de valeur respective (P_{I}) et est associée à la variante de valeur respective (P_{I}) par le biais d'un premier simulateur (SIM1) du système technique (SN),
d) les variantes de valeur (P_{I}) sont triées au moins partiellement selon les premières valeurs estimées (U1) respectivement associées,
e) un quantile (QP) des variantes de valeur triées (PS_{K}) correspondant à la valeur unitaire (q) est déterminé,
f) de multiples variantes de valeur (PS₅₀, ..., PS₁₅₀) qui se trouvent dans un environnement proche (IVL) du quantile (QP) en ce qui concerne le tri sont sélectionnées,
g) une valeur de mesure respective pour le paramètre de mise à disposition (U) du système technique (SN) est déterminée pour une variante de valeur sélectionnée respective (PS₅₀, ..., PS₁₅₀),
h) une troisième valeur estimative (U_{Q}) est déterminée pour le paramètre de mise à disposition (U) par le biais d'une compensation de fluctuations des valeurs de mesure, et
i) la troisième valeur estimative (U_{Q}) est communiquée en tant que paramètre de configuration destiné à la configuration du système technique (SN).

11. Agencement destiné à la configuration assistée par ordinateur d'un système technique, conçu pour la mise en œuvre d'un procédé selon l'une des revendications précédentes.

12. Produit de programme informatique conçu pour la mise en œuvre d'un procédé selon l'une des revendications 1 à 10.

13. Support de stockage lisible sur ordinateur comportant un produit de programme informatique selon la revendication 12.
